# EUROPEAN PATENT SPECIFICATION

(11) **EP 0 691 099 B1**
(45) Date of publication and mention of the grant of the patent: **10.12.2003**
(21) Application number: 95201702.8
(22) Date of filing: 22.06.1995
(51) Int. Cl.: A47L 15/00, D06F 39/00, A47L 15/42

(54) **Dishwasher or washing machine having means for recovering and storing rinse water for subsequent reuse as wash water.**
Geschirrspüler oder Waschmaschine, geeignet um das Spülwasser zwecks Wiederverwendung als Waschwasser zwischenzuspeichern.
Lave-vaisselles ou machine à laver le linge apte à emmaganiser son eau de rinçage afin d'une réutilisation en tant qu'eau de lavage.

(30) Priority: 04.07.1994 IT MI940477 U
(43) Date of publication of application: 10.01.1996
(73) Proprietor: CANDY S.p.A., I-20052 Monza (Milano) (IT)
(72) Inventor: Fumagalli, Silvano, I-20052 Monza, (Milano) (IT)
(74) Representative: Mittler, Enrico

(56) References cited:
- DE-A- 2 910 140
- DE-A- 3 936 989
- DE-A- 4 004 057
- US-A- 3 841 116

## Description

The present invention relates to dishwashers or washing machines.

The need to reduce the consumption of water used by dishwashers, washing machines and the Like during one of their washing cycLes is known.

For this purpose, and by virtue of the fact that a typical washing cycle substantially consists of a washing phase, followed by one or more rinsing phases, a solution has been proposed for washing machines aiming at storing the relatively clean water used during the final rinsing phase in order to reuse it in the washing phase of a subsequent cycle, it not being essential for the water used in this phase to be absolutely clean (in the sense of "drinkable").

To this end, it is necessary to provide a recovery tank wherein the water used during the final phase of rinsing, instead of being discharged, is sent to be stored until the subsequent washing cycle. This tank must have a capacity equal to the volume of water fed by the washing machine to perform rinsing, and must preferably be built into the household appliance, so as to avoid problems of housing in the spaces normally provided in Laundry rooms.

Recovery of the water used during the final phase of rinsing also means a saving of electrical energy for heating during the subsequent washing cycle. The water stored in the recovery tank is in fact at a temperature (room temperature of 20-22°C) which is on average 6-8°C higher than that of the water coming from the water supply system.

DE-A-2910140 discloses a washing machine according to the preamble of claim 1, which comprises a recovery tank T to store rinsing liquid for later reuse or washing liquid in a successive washing cycle. The rinsing liquid deriving from a tub B is put into the tank T by means of a transfer ducting comprising conduits G and H and a pump P2. The pump is selectively activated for permitting the transfer of the rinsing liquid from the tub B into the tank T after the rinsing cycle of the washing machine. The washing machine is preferably provided with an added container W of cationic or/and acid substances which is connected to a container E for putting detergent inside the tub B. In this way, particularly during the last rinsing cycle before a longer interruption of operation, it is possible to add a preset quantity of cationic or/and acid substances before the rinsing liquid is recovered in the tank T.

The problem Lies in the fact that the water recovered from the final phase of rinsing is in any case contaminated, and cannot be stored indefinitely without giving rise to unpleasant smells.

In view of the state of the art described, the object of the present invention is to provide a dishwasher or washing machine which is not affected by the aforementioned problem.

In accordance with the present invention, this object is achieved thanks to a dishwasher or washing machine as defined in claim 1.

Thanks to a dishwasher or washing machine according to the present invention, the washing liquid recovered after the final rinsing phase of a washing cycle can be stored in the recovery tank for Long periods, even months, since the addition of detergent greatly increases preservation by acting as a disinfectant.

This and other details of the present invention will be made clearer by the following detailed description of one of its embodiments, illustrated by way of a non-limiting example in the accompanying drawings, in which:
Figure 1 shows, sectioned along a vertical plane, a washing machine according to the present invention;
Figure 2 is a view sectioned along a horizontal plane of the machine in Figure 1;
Figure 3 shows in a plan view the detail of a part of a door of the washing machine wherein a compartmentalised detergent container is housed according to the present invention;

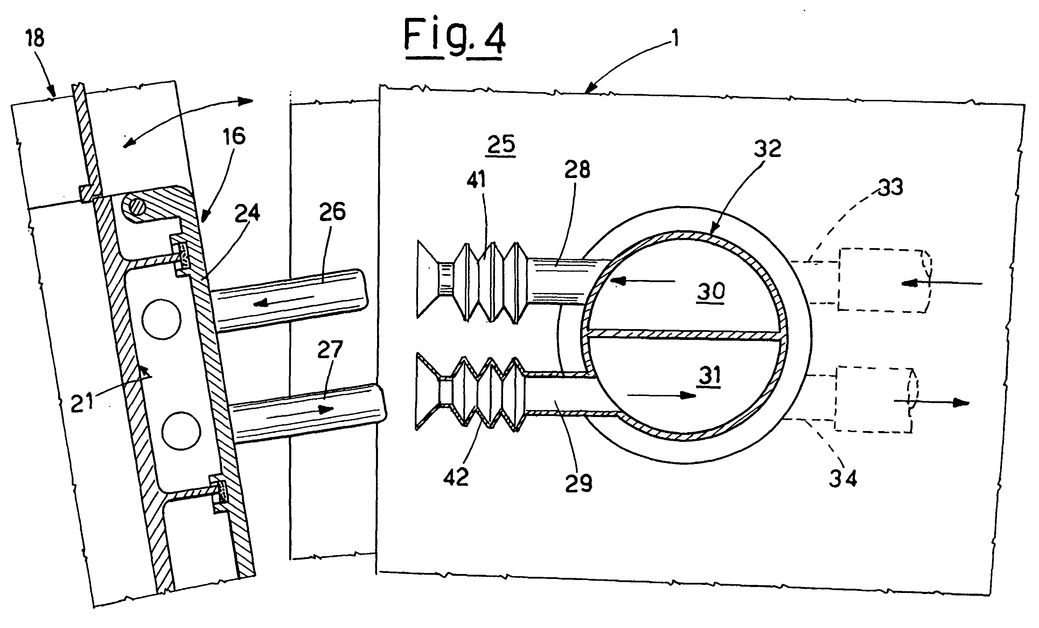

Figure 4 shows said compartmentalised detergent container sectioned along the vertical plane IV-IV of Figure 2, but with the door open.

The following description is given only as an example of a possible embodiment of the present invention. In this example it is assumed that the machine is a dishwasher.

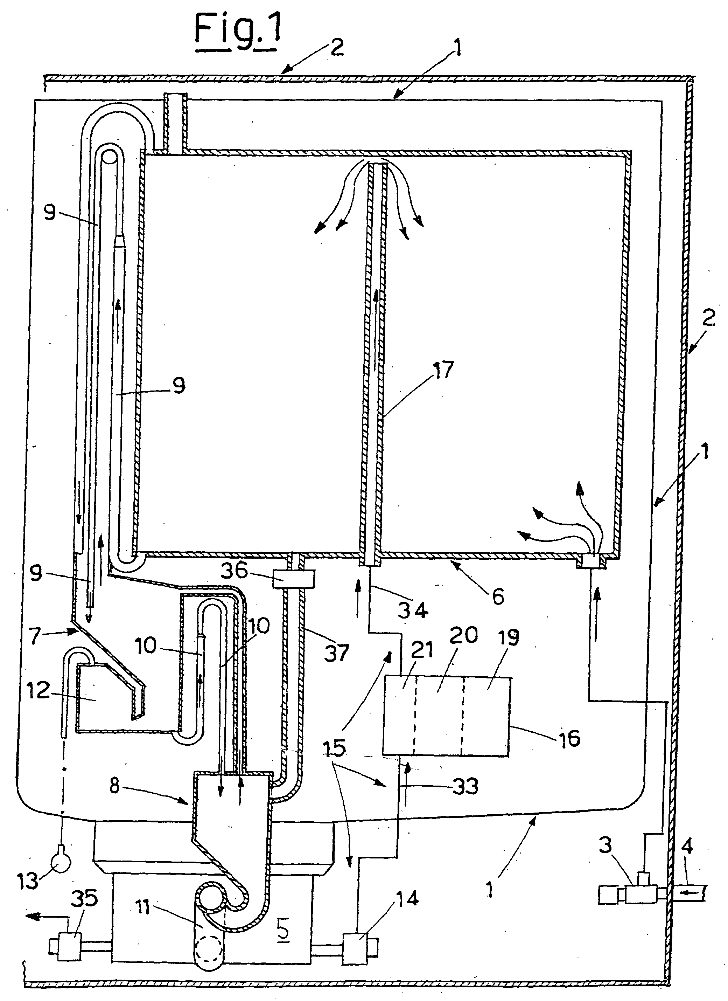

With reference to Figure 1, a dishwasher comprises a washing tub 1 housed inside a frame 2 forming the external casing of the dishwasher. Mounted on said frame 2 is a feed solenoid valve 3 whereto a pipe 4 for feeding clean water is connected externally.

The base of the washing tub 1 converges towards a collection basin or sump 5, whereto are connected a drain pump 35, which can be actuated to discharge the water contained in the washing tub 1, and a pump (not shown) for feeding spraying rotors which are placed in a manner in itself known inside the washing tub 1.

The dishwasher is equipped with a device for controlling the volume of water fed, substantially of the type described in the copending patent Application EP-A-0 669 099 (representing prior art according to Article 54(3) EPC) in the name of the same Applicant. This control device comprises a tank 6 with capacity equal to the volume of water required by the dishwasher in one single feed operation during a washing cycle (5 Litres in the case of a dishwasher for twelve table settings), a first transfer recipient 7 and a second transfer recipient 8. The tank 6, the first transfer recipient 7 and the second transfer recipient 8 are connected in cascade by siphon pipes 9 and 10. The second transfer recipient 8 is connected to the sump 5 by means of a hose bent to form a further siphon 11. The tank 6 is operatively connected to the feed solenoid valve 3, via a statutory air break device and a decalcification assembly (not shown in that known).

The first transfer recipient 7 comprises a pressure chamber 12 whereto a pressure switch 13 is connected. The pressure switch 13 is connected to a programming device (timer) for controlling the sequence of the phases of a washing cycle. The programming device commands the opening and closure of the feed solenoid valve 3, actuation of the pump for feeding the spraying rotors and actuation of the drain pump 35.

The siphon pipe 9 Leads into the base of the tank 6 and to the top of the first transfer recipient 7, placed at a Lower height from the ground in relation to the base of the tank 6. The siphon pipe 10 Leads into the base of the first transfer recipient 7 and the top of the second transfer recipient 8, placed at a Lower height from the ground in relation to the base of the first transfer recipient 7. The siphon pipe 9 triggers automatically when the tank 6 has been filled, and de-triggers when the tank 6 has been emptied. The siphon pipe 10 triggers when the first transfer recipient 7 has been filled with water coming from the tank 6, and de-triggers when the first transfer recipient 7 has been emptied. Subsequently the siphon pipes 9 and 10 cause, once triggered, transfer of all the water contained in the tank 6 into the sump 5, and hence into-the washing tub 1. Before the siphon pipe 10 triggers, the pressure of air in the pressure chamber 12 causes triggering of the pressure switch 13 which signals to the programming device to close the feed solenoid valve 3. In other words, when the tank 6 has been filled (i.e. when 5 Litres of water have been fed), transfer of water into the first transfer recipient 7 begins, where the increase in pressure consequent to the rise in the level of the water causes triggering of the pressure switch 13, and consequently closure of the solenoid valve 3.

The device for recovering and storing the water used in the final rinsing phase of a washing cycle uses the tank 6 as a recovery tank (obviously this is only made possible in the case wherein the dishwasher is equipped with the feed control device described; otherwise it is necessary to provide a specific recovery tank), and comprises a recovery pump 14 connected to the sump 5 and to a transfer ducting 15 for transferring water from the sump 5 to the tank 6. As shown schematically in Figure 1, a detergent container 16, which is to be described hereinbelow, also forms part of the transfer ducting 15. The transfer ducting 15 also comprises a substantially vertical conduit 17 which develops inside the tank 6, and whose end opening is positioned approximately at the top of the tank 6 itself.

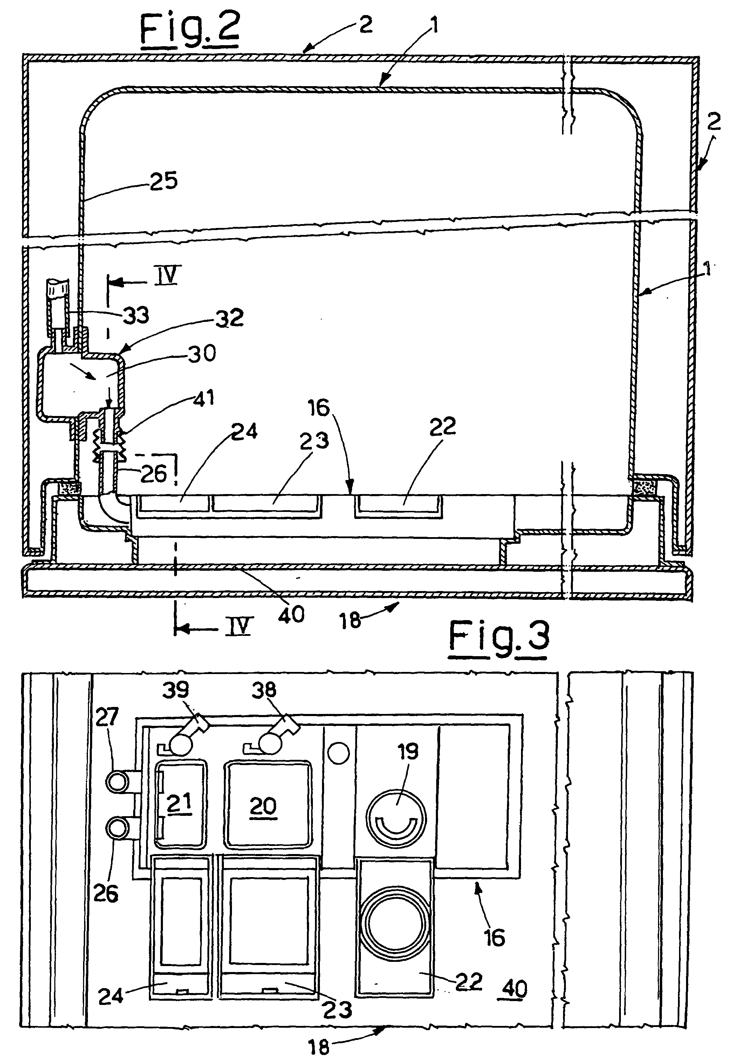

Figure 2 is a section of the dishwasher along a horizontal plane, wherein a door 18 for access to the washing tub 1 can be seen. The detergent container 16 is housed in a manner in itself known on the internal wall 40 of the door 18. As can be seen better in Figure 3, which shows in a front view the part of the door 18 wherein the detergent container 16 is housed, the Latter comprises substantially three separate compartments 19, 20 and 21. Each compartment is fitted with a respective cover 22, 23 and 24 hinged onto the container 16. The covers 23 and 24 are eLastically forced by respective springs (not visible) into the opening position shown in Figure 3. Two closure devices 38 and 39 allow the covers 23 and 24 to be Locked in the closure position. A first compartment 19 is for containing products such as polishing agents. A second compartment 20 is for containing a detergent to be used during washing of dishes. A third compartment 21, situated at the end of the container 16 closest to a lateral vertical wall 25 of the washing tub 1, is also for containing detergent. The total capacity of the compartments 20 and 21 is equal to the quantity of detergent required for washing a Load of twelve table settings (typically 30 g), but the compartment 21 has a smaller capacity (for example 10 g) compared to the compartment 20.

Two elbow conduits 26 and 27 are connected to the compartment 21 and extend into the washing tub 1. When the door 18 is closed, the conduits 26 and 27 are joined to two respective conduits 28 and 29 on each of which respective external rubber bellows seals 41 and 42 are fitted. The two conduits 28 and 29 Lead into two separate chambers 30 and 31 of a recipient 32 mounted on the wall 25 of the washing tub 1. Respective pipes 33 and 34 are also connected to each of the chambers 30 and 31. The pipe 33 Leads from the recovery pump 14, while the pipe 34 is connected to the conduit 17.

A typical washing cycle of a dishwasher consists of a washing phase, followed by one or more rinsing phases. Each of these phases corresponds to a water feed operation (5 Litres in the case of washing of twelve table settings), performed under the control of the control device described previously. Between one phase of the cycle and the next, before a fresh feed of water, the drain pump 35 is actuated to discharge the water contained in the washing tub 1. At the end of the final rinsing phase however, the drain pump 35 is not actuated, and the recovery pump 14 is instead started up. The water contained in the washing tub 1 is sent into the ducting 15, then passes into the compartment 21 of the detergent container 16 where it is combined with detergent, and from here is sent through the conduit 17 into the tank 6, wherein it is stored until the subsequent washing cycle. The quantity of water which can effectively be recovered is not 5 Litres, since at a certain point the recovery pump 14 starts cavitation. It has been demonstrated in experiments that the quantity of water which can actually be recovered is approximately 4.7 Litres; the remaining 0.3 Litre is left in the sump 5.

When the user starts up a subsequent washing cycle, after filling the compartments of the detergent container 16, the feed solenoid valve 3 is opened to allow feeding into the tank 6 of the quantity of water required for reaching the 5 Litres. At this point the siphon pipe 9 triggers, as described previously, and the pressure switch 13 signals to the programming device that the tank 6 has been filled. The programming device closes the solenoid valve 3. The main washing phase then starts: a cam (not shown), actuated by the programming device, acts on the closure device 38 in order to release the cover 23 of the compartment 20, which is automatically opened, so that the water spread by the spraying rotors can Load and mix with the detergent contained therein. The 20 g of detergent contained in the compartment 20 are added to the 10 g already mixed in the water contained in the tank 6 to obtain the quantity of 30 g of detergent normally required for washing twelve table settings.

The washing cycle then continues in the customary manner, until it reaches the final rinsing phase.

The device may also comprise a timed system of automatic discharge of the water contained in the recovery tank 6. For this purpose, as shown in Figure 1, the tank 6 is connected, by means of a solenoid valve 36 and a conduit 37, to the second transfer recipient 8, and hence to the sump 5. The dishwasher must also comprise a delay device of the "start delay" or "RTT" type, for example mounted on the same programming device. The solenoid valve 36 is normally closed, but is opened by the delay device after a preset Length of time has passed (for example 36 hours) from the end of the Last washing cycle. This Length of time can also be set by the user.

It is also possible to provide a manual selector switch for de-actuating the function of water recovery. In this case, in the subsequent washing cycle, it will be necessary to feed the 5 Litres of water. During the main washing phase, the aforementioned cam also actuates opening of the cover 24, so that all the 30 g of detergent are mixed with the washing water.

The device can be installed on dishwashers fitted with a control device which allows feeding of differentiated volumes of water, for washing loads of twelve or six table settings alternately, of the type described in the copending patent Application no. EP-A-0 685 198 (representing prior art according to Article 54(3) EPC), in the name of the same Applicant.

Although the embodiment of the present invention has been described with reference to a dishwasher, it may equally be used on washing machines.

## Claims

1. Dishwasher or washing machine having means for recovering and storing rinsing liquid for subsequent reuse as washing liquid, comprising a recovery tank (6) for storing rinsing liquid inside the washing machine and associated with a recovery pump (14) and with transfer ducting (15) for selectively connecting, at the end of the final rinsing phase in a washing cycle, a washing tub (1) of the washing machine to the recovery tank (6), so as to transfer rising liquid therethrough by action of the recovery pump (14), and further comprising a detergent holder (16), **characterised in that** the detergent holder (16) includes separate compartments comprising a first larger compartment (20) and a second smaller compartment (21) having together a capacity equal to the quantity of the detergent required for a washing cycle of the washing machine, said second smaller compartment being linked into the transfer ducting (15) between the washing tub (1) and the recovery tank (6) so that rinsing liquid, when pumped out of the washing tub (1), absorbs the detergent held in the second smaller compartment (21) before entering said recovery tank (6).

2. Dishwasher or washing machine according to claim 1, **characterised in that** it also comprises means (35-37) which can be timed and actuated to cause discharge of the liquid stored in the recovery tank (6).

3. Dishwasher or washing machine according to claim 2, **characterised in that** said means (35-37) comprise valve means (36) connected to the recovery tank (6), and a timer for commanding actuation of said valve means (36) after a predetermined length of time from the end of the last washing cycle.

4. Dishwasher or washing machine according to claim 1, **characterised in that** said recovery tank (6) also serves as tank for a device controlling the volume of washing liquid fed into the washing tub (1) ia a feed phase of the washing cycle.

5. Dishwasher or washing machine according to claim 1, **characterised in that** said transfer circuit (15) comprises the recovery pump (14).

6. Dishwasher or washing machine according to claim 2, **characterised in that** the detergent holder (16) is mounted on a door (18) for accessing the washing tub (1), said second smaller compartment (21) being connected to two conduits (26, 27) for entry of the liquid coming from the pump (14) and for exit of the liquid to be transferred into the recovery tank (6) respectively.

## Patentansprüche

1. Geschirrspül- oder Waschmaschine, welche eine Einrichtung zur Rückgewinnung und Speicherung von Spülflüssigkeit für den anschließenden Wiedereinsatz als Waschflüssigkeit hat, welche einen Rückgewinnungsbehälter (6) zur Speicherung der Spülflüssigkeit im Innern der Waschmaschine und eine zugeordnete Rückgewinnungspumpe (14) und einen Förderkanal (15) aufweist, welcher selektiv am Ende der abschließenden Spülphase bei einem Waschzyklus eine Waschwanne (1) der Waschmaschine mit dem Rückgewinnungsbehälter (6) verbindet, so daß Spülflüssigkeit hierüber unter der Einwirkung der Rückführungspumpe (14) gefördert wird, und die ferner einen Reinigungsmittelhalter (16) aufweist, **dadurch gekennzeichnet, daß** der Reinigungsmittelhalter (16) gesonderte Kammern umfaßt, welche eine erste, größere Kammer (20), und eine zweite, kleinere Kammer (21) aufweisen, welche zusammen ein Fassungsvermögen haben, das gleich der Menge des für einen Waschzyklus der Waschmaschine benötigten Reinigungsmittels ist, die zweite, kleinere Kammer mit dem Förderkanal (15) zwischen der Waschwanne (1) und dem Rückgewinnungsbehälter (6) derart verbunden ist, daß die Spülflüssigkeit, wenn sie aus der Waschwanne (1) abgepumpt wird, das in der zweiten, kleineren Kammer (21) enthaltene Reinigungsmittel absorbiert, bevor die Spülflüssigkeit in den Rückgewinnungsbehälter (6) eintritt.

2. Geschirrspül- oder Waschmaschine nach Anspruch 1, **dadurch gekennzeichnet, daß** sie auch eine Einrichtung (35 bis 37) aufweist, welche zeitlich gesteuert derart betätigt werden kann, daß die in dem Rückgewinnungsbehälter (6) gespeicherte Flüssigkeit ausgegeben werden kann.

3. Geschirrspül- oder Waschmaschine nach Anspruch 2, **dadurch gekennzeichnet, daß** die Einrichtung (35 bis 37) eine Ventileinrichtung (36) aufweist, welche mit dem Rückgewinnungsbehälter (6) verbunden ist, und einen Zeitgeber zur Betätigung der Ventileinrichtung (36) aufweist, nachdem eine vorbestimmte Zeitdauer von dem Ende des letzten Waschzyklusses abgelaufen ist.

4. Geschirrspül- oder Waschmaschine nach Anspruch 1, **dadurch gekennzeichnet, daß** der Rückgewinnungsbehälter (6) auch als ein Behälter für eine Einrichtung zur Steuerung des Volumens der Waschflüssigkeit dient, welche in die Waschwanne (1) in einer Zulaufphase des Waschzyklusses eingeleitet wird.

5. Geschirrspül- oder Waschmaschine nach Anspruch 1, **dadurch gekennzeichnet, daß** der Förderkanal (15) die Rückgewinnungspumpe (14) aufweist.

6. Geschirrspül- oder Waschmaschine nach Anspruch 2, **dadurch gekennzeichnet, daß** der Reinigungsmittelhalter (16) an einer Türe (18) für den Zugang zu der Waschwanne (1) angebracht ist, die zweite, kleinere Kammer (21) die zwei Leitungen (26, 27) zum Einleiten der von der Pumpe (14) kommenden Flüssigkeit und zum Ausleiten der zu dem Rückgewinnungsbehälter (6) zu fördernden Flüssigkeit verbunden ist.

## Revendications

1. Lave-vaisselle ou machine à laver ayant des moyens destinés à récupérer et stocker du liquide de rinçage pour réutilisation consécutive comme liquide de lavage, comportant un réservoir de récupération (6) pour le stockage du liquide de rinçage à l'intérieur de la machine à laver et associé à une pompe de récupération (14) et à une tuyauterie de transfert (15) destinée à raccorder de manière sélective, à la fin de la phase de rinçage finale dans un cycle de lavage, une cuve de lavage (1) de la machine à laver au réservoir de récupération (6), de façon à transférer du liquide de rinçage à travers grâce à l'action de la pompe de récupération (14), et comportant en outre un réservoir de détergent (16), **caractérisé en ce que** le réservoir de détergent (16) comprend des compartiments séparés comportant un premier compartiment plus grand (20) et un deuxième compartiment plus petit (21) ayant ensemble une capacité égale à la quantité de détergent exigée pour un cycle de lavage de la machine à laver, ledit deuxième compartiment plus petit étant relié dans la tuyauterie de transfert (15) entre la cuve de lavage (1) et le réservoir de récupération (6) de telle sorte que le liquide de rinçage, lorsqu'il est pompé hors de la cuve de lavage (1), absorbe le détergent maintenu dans le deuxième compartiment plus petit (21) avant d'entrer dans ledit réservoir de récupération (6).

2. Lave-vaisselle ou machine à laver selon la revendication 1, **caractérisé en ce qu'**il comporte également des moyens (35 à 37) qui peuvent être temporisés et actionnés afin de provoquer l'évacuation du liquide stocké dans le réservoir de récupération (6).

3. Lave-vaisselle ou machine à laver selon la revendication 2, **caractérisé en ce que** lesdits moyens (35 à 37) comportent des moyens de soupape (36) reliés au réservoir de récupération (6), et un temporisateur destiné à commander l'actionnement desdits moyens de soupape (36) après une durée prédéterminée depuis la fin du dernier cycle de lavage.

4. Lave-vaisselle ou machine à laver selon la revendication 1, **caractérisé en ce que** ledit réservoir de récupération (6) sert également de réservoir pour un dispositif qui commande le volume de liquide de lavage délivré dans la cuve de lavage (1) dans une phase d'alimentation en liquide de lavage.

5. Lave-vaisselle ou machine à laver selon la revendication 1, **caractérisé en ce que** ladite tuyauterie de transfert (15) comprend la pompe de récupération (14).

6. Lave-vaisselle ou machine à laver selon la revendication 2, **caractérisé en ce que** le réservoir de détergent (16) est monté sur une porte (18) pour l'accès à la cuve de lavage (1), ledit deuxième compartiment plus petit (21) étant relié à deux conduites (26, 27) pour l'entrée du liquide provenant de la pompe (14) et pour la sortie du liquide devant être transféré dans le réservoir de récupération (6) respectivement.
